# EUROPÄISCHE PATENTSCHRIFT

(11) **EP 2 777 136 B1**
(45) Veröffentlichungstag und Bekanntmachung des Hinweises auf die Patenterteilung: **06.07.2016**
(21) Anmeldenummer: 12768860.4
(22) Anmeldetag: 05.10.2012
(51) Int. Cl.: H02K 7/00

(54) **LINEARANTRIEB FÜR MÖBEL**
LINEAR ACTUATOR FOR FURNITURE
ACTIONNEMENT LINÉAIRE POUR DES MEUBLES

(30) Priorität: 09.11.2011 DE 102011086037
(43) Veröffentlichungstag der Anmeldung: 17.09.2014
(73) Patentinhaber: Dewertokin GmbH, 32278 Kirchlengern (DE)
(72) Erfinder: DÜCK, Heinrich, 32339 Espelkamp (DE); MARTIN, Jürgen, 32257 Bünde (DE)
(74) Vertreter: Lippert, Stachow & Partner
(86) Internationale Anmeldenummer: PCT/EP2012/069758
(87) Internationale Veröffentlichungsnummer: WO 2013/068184

(56) Entgegenhaltungen:
- EP-A1- 2 131 068
- WO-A2-2009/039853
- DE-B3-102004 058 152
- DE-U1- 29 811 566
- DE-U1-202005 002 585

## Beschreibung

Die Erfindung betrifft einen elektromotorischen Linearantrieb, insbesondere zum Verstellen von beweglich gelagerten Teilen von Liege- und Sitzmöbeln, einschließlich für den medizinischen Bereich, wie Rehabilitationsgerätschaften, Pflegebetten etc., mit einem Antriebsmotor, einer Gewindespindel, einem zwischen dem Antriebsmotor und der Gewindespindel angeordneten Drehzahlreduziergetriebe, einer auf der Gewindespindel sitzenden Spindelmutter, die wahlweise in Drehrichtung arretierbar und in Abhängigkeit von der Drehrichtung der Gewindespindel in Axialrichtung der Gewindespindel verfahrbar ist, sowie einem durch die Axialbewegung der Spindelmutter antreibbaren Hubelement zum Verstellen der beweglichen Möbelteile.

Ein solcher elektromotorischer Linearantrieb kann sowohl als Einzelantrieb als auch als Doppelantrieb verwendet werden.

Aus der EP 0 968 675 B1 ist bereits ein Einzel- oder Doppelantrieb bekannt, der insbesondere für Möbel des Krankenhaus- und/oder des Pflegebereichs vorgesehen ist. Bei diesem bekannten Linearantrieb ist als Drehzahlreduziergetriebe eine auf einer Motorwelle sitzende Schnecke vorgesehen, die mit einem Schneckenrad im Eingriff steht. Das Schneckenrad ist drehbar auf einem fest auf der Gewindespindel angeordneten Führungskörper gelagert, auf dem ein Kupplungsrad drehfest, jedoch axial verschiebbar geführt ist. Wenn das Kupplungsrad mit dem Schneckenrad gekuppelt ist, wird die Gewindespindel angetrieben, während im entkuppelten Zustand die Gewindespindel stillsteht. Auf der Gewindespindel ist eine mit einem Hubelement in Verbindung stehende Spindelmutter drehfest angeordnet, die sich in Abhängigkeit von der Drehrichtung der Gewindespindel in axialer Richtung verschiebt und das zur Betätigung der beweglichen Möbelteile dienende Hubelement antreibt.

Ein solcher Antriebsmechanismus hat sich zwar in der Praxis bereits bewährt, jedoch ist ein solcher Mechanismus relativ aufwendig und nicht beliebig belastbar. WO 2005/039853. Weitere Stand der Technik Dokumente sind EP 2 131 068, DE 102004058152. Der Erfindung liegt daher die Aufgabe zugrunde, einen Linearantrieb zu schaffen, der einfach im Aufbau ist, sich leicht montieren und bedienen lässt und eine robuste Lagerung der Antriebsteile gewährleistet.

Erfindungsgemäß wird diese Aufgabe dadurch gelöst, dass das Antriebsrad des Drehzahlreduziergetriebes fest mit der Gewindespindel verbunden ist, dass ein sich an dem Getriebegehäuse oder an einem daran angeschlossenen Gehäuseabschnitt abstützendes, mit der Spindelmutter zusammenwirkendes Kupplungselement vorgesehen ist, dass die Spindelmutter an ihrem Umfangsbereich mit mindestens zwei in entgegengesetzte Umfangsrichtungen weisenden Anschlagflächen versehen ist, dass das Kupplungselement in Richtung auf den Umfangsbereich der Spindelmutter und von diesem weg bewegbar ist, wobei es im gekuppelten Zustand mit den Anschlagflächen der Spindelmutter zusammenwirkt, und dass das Kupplungselement leistenförmig ausgebildet ist und sich entlang der gesamten Hublänge der Spindelmutter erstreckt.

Die erfindungsgemäße Konstruktion ist relativ einfach im Aufbau und stark belastbar, da die Anschlagflächen der Spindelmutter im Betrieb sowie auch in den Stillstandszeiten ständig an dem leistenförmigen, sich an dem Getriebegehäuse abstützenden Kupplungselement anliegen und dadurch eine stabile Halterung bieten. Lediglich zur Schnellverstellung oder bei Stromausfall wird das Kupplungselement von Hand gelöst, sodass sich die angehobenen Möbelteile einfach und problemlos von selbst durch ihr Gewicht absenken oder sich manuell in die gewünschte Position bewegen lassen.

Aus der WO 2006/087365 A2 ist bereits eine Möglichkeit bekannt, eine Spindelmutter mittels einer Schlingfederbremse in Umfangsrichtung zu blockieren und durch die Rotation der Gewindespindel in Axialrichtung zu bewegen. Diese bekannte Konstruktion ist in gewisser Weise mit dem sehr robusten und belastbaren Aufbau der erfindungsgemäßen Konstruktion vergleichbar, jedoch deutlich aufwendiger in der Montage und im Aufbau. Auf der anderen Seite bildet die Ausführung gemäß der WO 2006/087365 A2 gegenüber der vorliegenden Erfindung die Möglichkeit der Schnellverstellung durch ein reibschlüssiges Kupplungselement, welches durch eine Schlingfeder gebildet ist und wobei die auf den Linearantrieb wirkende Verstelllast durch das manuell steuerbare und damit feinfühlig lösbare Kupplungselement wahlweise schneller oder langsamer verstellt werden kann. Der vorliegenden Erfindung liegt ferner die Aufgabe zugrunde, eine robuste Aus- und Einkuppelbarkeit gegenüber diesem Stand der Technik zu schaffen, welche schaltbar ausgebildet ist und die Robustheit des Drehzahlreduziergetriebes unverändert bleibt.

Das leistenförmige Kupplungselement, welches sich entlang der gesamten Hublänge der Spindelmutter erstreckt, kann radial zu der Spindelmutter bewegbar sein und ist zweckmäßig in dem Getriebegehäuse geführt.

Vorzugsweise ist das leistenförmige Kupplungselement jedoch schwenkbar in dem Getriebegehäuse gelagert und kann sich mit einer Radialkomponente in Richtung auf die Spindelmutter und von dieser weg bewegen.

An das leistenförmige Kupplungselement können sich zumindest in einigen Bereichen im Querschnitt bogenförmige Profilabschnitte anschließen, wobei sich die Enden der bogenförmigen Profilabschnitte an einer in dem Getriebegehäuse vorgesehenen Anlagefläche abstützen. Eine solche Abstützmöglichkeit bietet eine besonders robuste Bauweise, bei der das Kupplungselement auch größeren Kräften standhalten kann.

Darüber hinaus können in dem Getriebegehäuse buckelförmige Vorsprünge ausgebildet sein, wobei die bogenförmigen Profilabschnitte des Kupplungselements in der eingekuppelten Stellung diese formschlüssig umgreifen. Dadurch wird die Belastbarkeit des mit der Spindelmutter in Wirkverbindung stehenden Kupplungselements noch wesentlich erhöht.

Die Spindelmutter ist zweckmäßig über ein Kugellager bzw. Axiallager fest mit dem Hubelement gekoppelt, welches in dem Getriebegehäuse axial verschieblich, jedoch nicht drehbar gelagert ist.

Zum Erreichen einer sogenannten Schnellverstellung kann außen an dem Getriebegehäuse ein von Hand oder über Bowdenzüge schwenkbarer Betätigungshebel zum Ein- und Auskuppeln des leistenförmigen Kupplungselements vorgesehen sein.

Das leistenförmige Kupplungselement ist zweckmäßig in Richtung auf seine gekuppelte Stellung, die die Normalstellung im Betrieb ist, federbelastet, sodass das Entkuppeln entgegen der wirkenden Federkraft stattfindet. Beim anschließenden Lösen des Betätigungshebels rastet das leistenförmige Kupplungselement aufgrund der Federbelastung wieder in die gekuppelte Stellung ein, in der die Spindelmutter bezüglich ihrer Drehung blockiert ist.

Zum Ein- und Auskuppeln des Kupplungselements kann der Betätigungshebel mit einem in Axialrichtung der Gewindespindel beweglichen Schiebeelement verbunden sein, das mit schrägen Auflaufflächen versehen ist, an denen Nocken des leistenförmigen Kupplungselements anliegen. Durch die mit dem Betätigungshebel bewirkte Längsverschiebung des Schiebeelements kann das leistenförmige Kupplungselement zwischen seiner gekuppelten und entkuppelten Stellung hin- und herbewegt werden.

Es ist somit eine Bewegungsumlenkung gebildet, so dass in vorteilhafter Weise der Betätigungshebel schlank am Getriebegehäuse angeordnet ist und längsseits daran bewegt und geführt ist, während quer zu dessen Bewegungsrichtung die Bewegungsrichtung des Kupplungselements erfolgt. Dadurch ist eine kompakte Bauweise geschaffen, wobei sich sowohl eine direkte manuelle Betätigung als auch eine Fernbetätigung durch einen Bowdenzug schlank und längsseits des Getriebegehäuses erstrecken kann und am Getriebegehäuse angeordnet werden kann.

Beim Anheben der Nocken mit Hilfe der schrägen Auflaufflächen des Schiebeelements kann das Kupplungselement entgegen der Federkraft in die entkuppelte Stellung bewegt werden. Beim Absenken der Nocken des Kupplungselements wird dieses durch die Federkraft wieder in die gekuppelte Stellung gebracht.

Um den Kupplungsvorgang zu erleichtern, kann die Spindelmutter an ihrem Umfang mehrere, vorzugsweise vier, Ausnehmungen aufweisen, an deren Randbereichen jeweils die in entgegengesetzte Richtungen weisenden Anschlagflächen vorgesehen sind. Zum Einrasten des leistenförmigen Kupplungselements sind somit vier über den Umfang der Spindelmutter verteilte Kupplungsbereiche vorgesehen.

Um die Schnellverstellung, insbesondere bei Stromausfall, problemlos zu gewährleisten, kann die Gewindesteigung der Gewindespindel sowie der Spindelmutter vorzugsweise so bemessen sein, dass keine Selbsthemmung eintritt.

Darüber hinaus kann auch das Drehzahlreduziergetriebe nicht selbsthemmend, aber mit einer hohen Bremswirkung ausgebildet sein.

Zur Erhöhung der Bremswirkung kann zusätzlich eine Bremse mit der Spindel oder mit dem Drehzahlreduziergetriebe in wirktechnischer Verbindung stehen oder daran angeordnet sein. Eine derartige Bremse ist vorzugsweise als reibschlüssige Bremse ausgebildet und kann ein Schlingband, Bremsbacken, Bremsklötze oder dergleichen aufweisen und ist in bevorzugter Form als Schlingfederbremse ausgebildet.

Das Drehzahlreduziergetriebe besteht vorzugsweise aus einer auf der Motorwelle sitzenden Schnecke und einem als Antriebsrad der Gewindespindel dienenden, fest mit der Gewindespindel verbundenen Schneckenrad.

Das mit der Spindelmutter zusammenwirkende Hubelement steht zweckmäßig in Wirkverbindung mit einem Hebelmechanismus, der eine Betätigungswelle zum Verstellen der entsprechenden beweglichen Möbelteile schwenkt, oder ein daran angeschlossenes Möbelbauteil relativ zu einem anderen Möbelbauteil direkt oder über zwischengeschaltete Hebel bewegt.

Vorausgesetzt, dass das Antriebsrad des Drehzahlreduziergetriebes fest mit der Gewindespindel verbunden ist und das Hubelement in Axialrichtung der Gewindespindel nicht verdrehbar geführt ist, kann die Spindelmutter alternativ auch derart mit dem Hubelement kuppelbar sein, dass sie wahlweise unverdrehbar mit diesem verbunden oder von diesem gelöst ist.

Die Erfindung ist in der Zeichnung beispielhaft veranschaulicht und im Nachstehenden im Einzelnen anhand der Zeichnung beschrieben. Es zeigen:
- Fig. 1:: einen Längsschnitt durch einen linearen Doppelantrieb;
- Fig. 2:: in auseinandergezogener Darstellung die Gewindespindel mit den mit dieser verbundenen Konstruktionsteilen;
- Fig. 3:: in vergrößertem Maßstab einen Schnitt entlang der Linie III-III aus Fig. 1 im gekuppelten Zustand der Spindelmutter;
- Fig. 4:: den gleichen Schnitt wie Fig. 2 im entkuppelten Zustand der Spindelmutter;
- Fig. 5:: in ebenfalls vergrößertem Maßstab in perspektivischer Darstellung einen Ausschnitt aus Fig. 1 im Bereich der Spindelmutter, wobei das Kupplungselement mit der Spindelmutter im Eingriff steht;
- Fig. 5a:: in nochmals vergrößertem Maßstab das isoliert dargestellte Kupplungselement mit dem Schiebeelement sowie dem zur Bewegung des Schiebeelements dienenden Betätigungshebel gemäß der in Fig. 5 gezeigten Position;
- Fig. 6:: die gleiche Darstellung wie Fig. 4 im entkuppelten Zustand der Spindelmutter und
- Fig. 6a:: die gleiche Darstellung wie in Fig. 5a in der in Fig. 6 gezeigten Position.

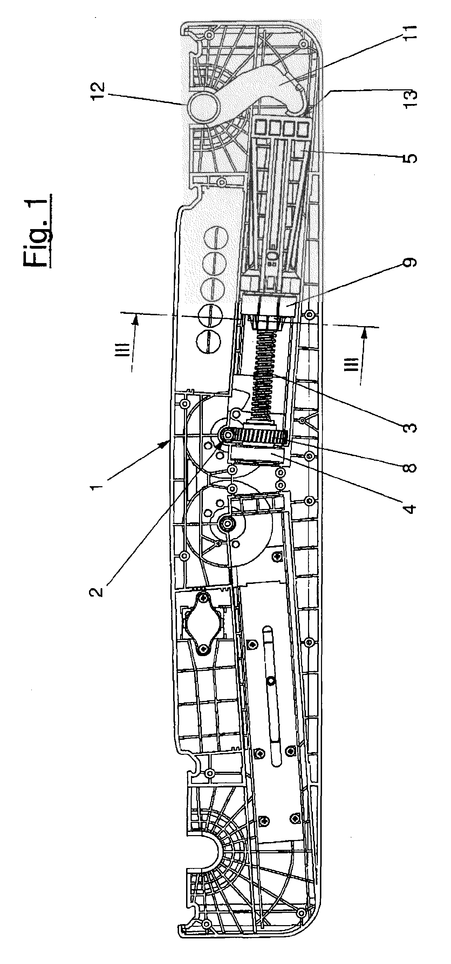

Bei dem in Fig. 1 dargestellten Schnitt durch einen linearen Doppelantrieb sind die beiden rechts und links dargestellten Bereiche identisch ausgebildet. Es werden daher nur die im rechten Teil des Getriebegehäuses 1 angeordneten Konstruktionselemente beschrieben.

Ein in der Zeichnung nicht näher dargestellter Motor treibt über ein Drehzahlreduziergetriebe 2 eine Gewindespindel 3 an. Die Gewindespindel 3 ist an ihrem linken Ende in einem Lager 4, vorzugsweise einem Kugellager, in dem Getriebegehäuse 1 gelagert. Das gegenüberliegende Ende der Gewindespindel 3 wird von einem Hubelement 5 abgestützt, welches einen im Wesentlichen quadratischen Querschnitt aufweist und axial verschieblich in dem Getriebegehäuse 1 geführt ist.

Von dem nicht näher dargestellten Motor ist in der Zeichnung lediglich die Ausgangswelle 6 zu erkennen, auf der eine Schnecke 7 drehfest angeordnet ist. Die Schnecke 7 steht im Eingriff mit einem Schneckenrad 8, welches sowohl drehfest als auch axial unverschieblich auf der Gewindespindel 3 befestigt ist.

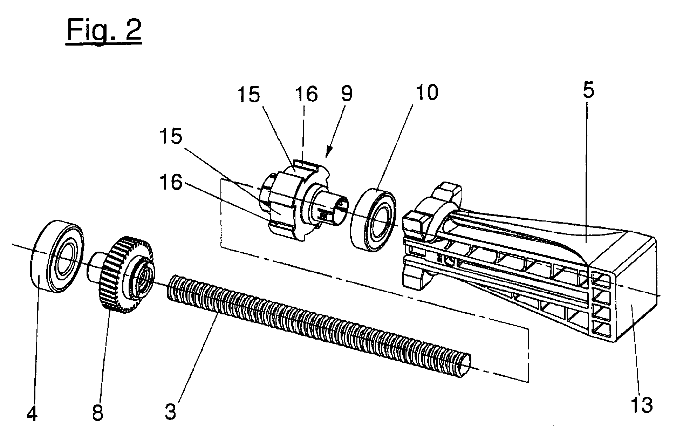

Auf der Gewindespindel 3 sitzt ferner eine Spindelmutter 9, die, wie aus Fig. 2 zu erkennen ist, über ein Kugellager 10 drehbar aber in axialer Richtung fest mit dem Hubelement 5 verbunden ist.

Wenn die Spindelmutter 9 in Umfangsrichtung blockiert ist, wird sie in Abhängigkeit von der Drehrichtung der Gewindespindel 3 in axialer Richtung vor- oder zurückbewegt und verschiebt dadurch das Hubelement 5.

Das Hubelement 5 steht in Wirkverbindung mit einem Hebelmechanismus 11, der eine Betätigungswelle 12 zum Verstellen der entsprechenden beweglichen Möbelteile schwenkt. Wenn das Hubelement 5 in der Zeichnung nach rechts bewegt wird, wird der Hebelmechanismus 11 nach rechts verschwenkt und verdreht dadurch die Betätigungswelle 12 zum Anheben entsprechender Möbelteile entgegen dem Uhrzeigersinn. Wenn sich das Hubelement 5 nach links bewegt, drücken die zuvor angehobenen Möbelteile durch ihr Eigengewicht nach unten und verschwenken die Betätigungswelle 12 sowie den an der rechten Stirnfläche 13 des Hubelements 5 anliegenden Hebelmechanismus 11 im Uhrzeigersinn.

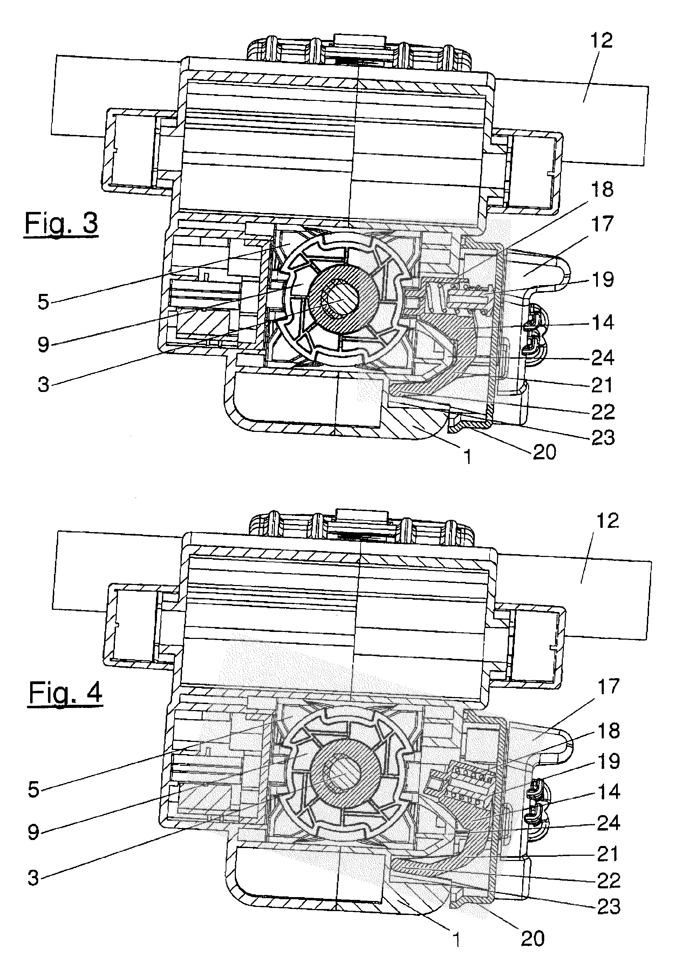

Ein motorbetätigter Vorschub der Spindelmutter 9 zum Anheben und Absenken der beweglichen Möbelteile erfolgt nur dann, wenn die Spindelmutter 9 auf der angetriebenen Gewindespindel 3 in Umfangsrichtung festgehalten wird. Die Blockierung der Spindelmutter 9 erfolgt mit Hilfe eines Kupplungselements 14, das in den Figuren 3 und 4 in zwei Positionen dargestellt ist.

In Fig. 3 ist die Normalposition des Kupplungselements 14 veranschaulicht. In der Mitte der Zeichnung ist im Hintergrund das etwa quadratisch ausgebildete Hubelement 5 zu erkennen und davor die Spindelmutter 9, die auf der Gewindespindel 3 sitzt und mit ihrem Innengewinde mit dem Außengewinde der Gewindespindel 3 im Eingriff steht.

Die Spindelmutter 9 ist bei dem in der Zeichnung dargestellten Ausführungsbeispiel im Wesentlichen kreisrund ausgebildet und weist an ihrem Umfang vier jeweils um 90° zueinander versetzte Ausnehmungen 15 auf, die besonders gut in Fig. 2 zu erkennen sind. Die Ausnehmungen 15 sind mit je zwei einander gegenüberliegenden Anschlagflächen 16 versehen, die mit dem Kupplungselement 14 zusammenwirken.

Im gekuppelten Zustand greift das Kupplungselement 14 in die jeweilige Ausnehmung 15 der Spindelmutter 9 ein, sodass beim Weiterdrehen der Spindelmutter 9 je nach Drehrichtung der Gewindespindel 3 eine der beiden Anschlagflächen 16 an dem Kupplungselement 14 zur Anlage kommt. Von dem Moment an, wenn eine der Anschlagflächen 16 der Spindelmutter 9 an dem Kupplungselement 14 zur Anlage kommt, wird die Spindelmutter 9 in Umfangsrichtung festgehalten und bewegt sich dadurch bei rotierender Gewindespindel 3 je nach Drehrichtung der Gewindespindel 3 in die eine oder andere Richtung. Bei ihrer Axialbewegung nimmt die Spindelmutter 9 das Hubelement 5 mit, sodass dadurch die zu bewegenden Möbelteile entweder angehoben oder abgesenkt werden.

In Fig. 4 ist die entkuppelte Position des Kupplungselements 14 dargestellt, bei der das Kupplungselement 14 eine aus der Ausnehmung 15 zurückgezogene Position einnimmt, sodass keine der Anschlagflächen 16 der Spindelmutter 9 an dem Kupplungselement 14 anliegt. In diesem Betriebszustand kann die Spindelmutter 9 gemeinsam mit der Gewindespindel 3 rotieren, d.h. dass ein Leerlaufzustand besteht.

Diese Position des Kupplungselements 14 bewirkt aber in erster Linie, dass eine Schnellabsenkung der Möbelteile oder auch eine Absenkung der Möbelteile bei Stromausfall, bei der die Gewindespindel 3 nicht angetrieben werden kann, möglich ist. Da das Gewinde der Gewindespindel 3 keine Selbsthemmung erzeugt, kann beim Zurückziehen des Kupplungselements 14 aus der Ausnehmung 15 durch den Druck der abzusenkenden Möbelteile, die über den Hebelmechanismus 11 auf das Hubelement 5 drücken, die Mutter frei auf der stillstehenden Gewindespindel 3 rotieren kann, wodurch sie sich gemäß Fig. 1 nach links bewegt.

Die Bewegung des Kupplungselements 14 zwischen einer eingekuppelten und ausgekuppelten Stellung erfolgt mittels eines Betätigungshebels 17, dessen Funktionsweise später noch beschrieben wird.

Das Kupplungselement 14 kann durch entsprechende Schwenkung des Betätigungshebels 17 zwischen zwei in den Figuren 3 und 4 dargestellten Extremstellungen hin- und herbewegt werden.

Die in Fig. 3 dargestellte eingekuppelte Stellung ist die Normalstellung, bei der die Spindelmutter 9 in Drehrichtung fixiert ist. Das Kupplungselement 14 wird dabei über eine Druckfeder 18 in der eingekuppelten Stellung gehalten, wobei sich die Feder mittels eines Führungsbolzens 19 an der Innenfläche einer Abdeckhaube 20, die an das Getriebegehäuse 1 angeschraubt ist, abstützt. Beim Zurückschwenken des Kupplungselements 14 in die in Fig. 4 dargestellte entkuppelte Position wird die Druckfeder 18 gespannt, sodass sie sich bei entsprechender Schwenkung des Betätigungshebels 17 zu gegebener Zeit wieder ihre in Fig. 3 dargestellte Normalposition zurückbewegen kann.

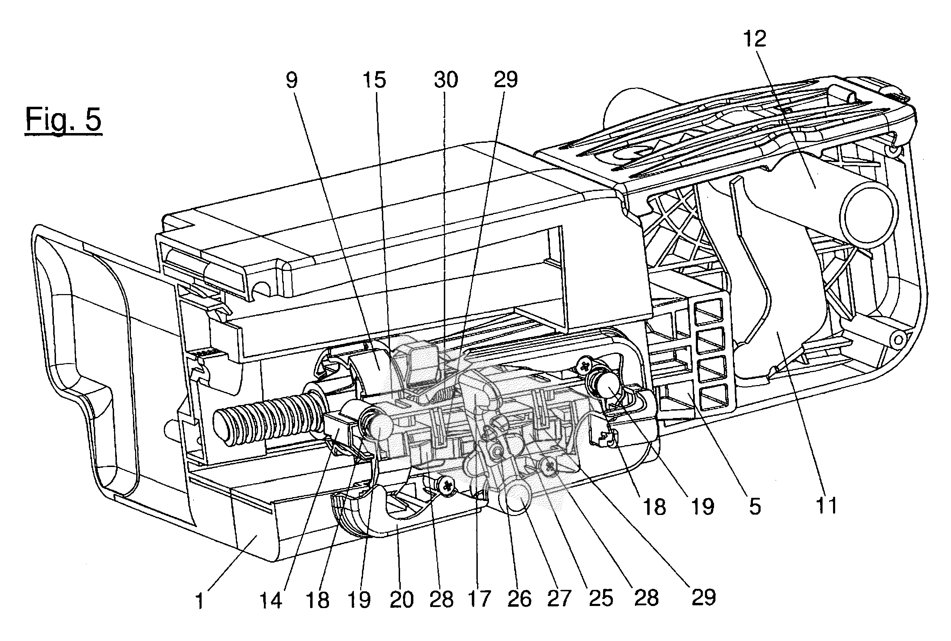

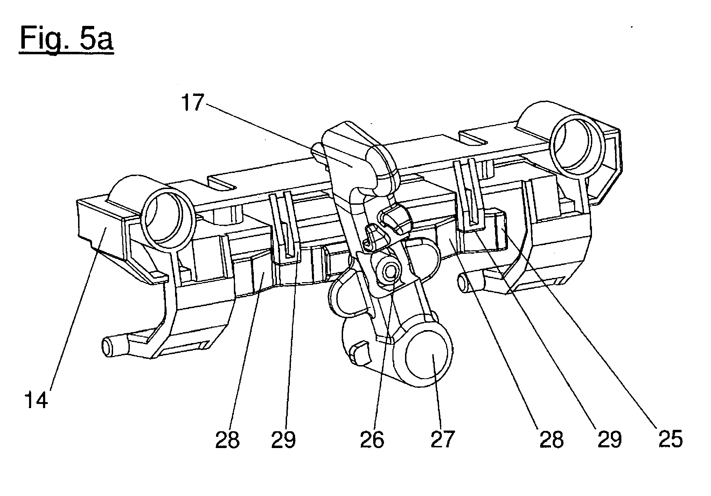

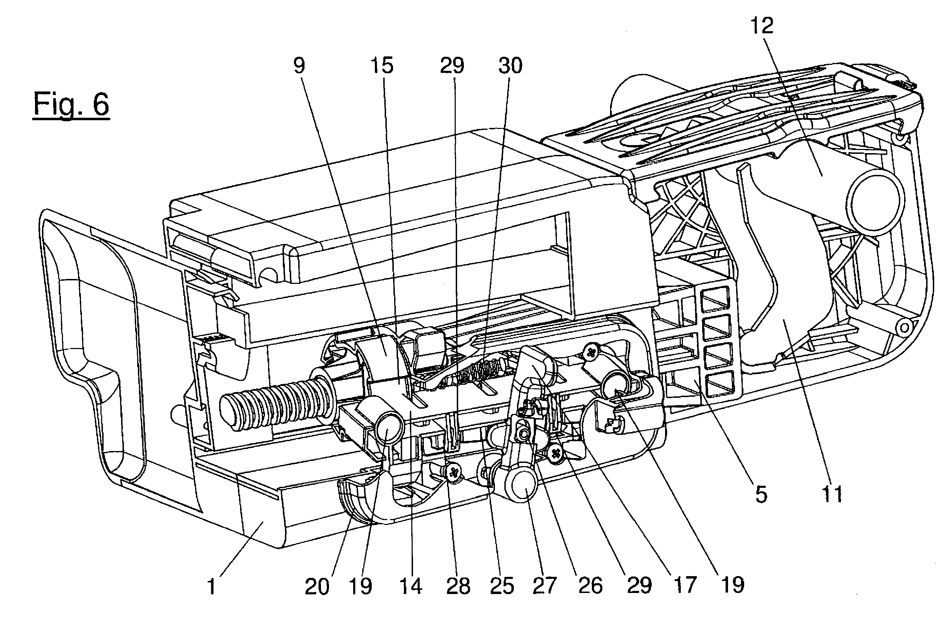

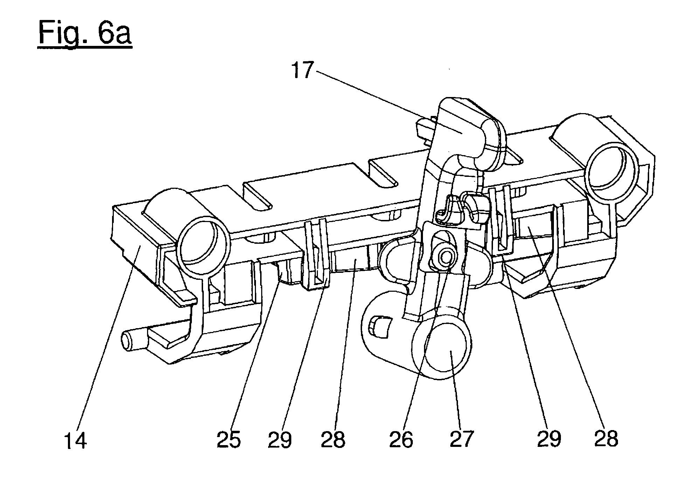

Bei dem in der Zeichnung dargestellten Ausführungsbeispiel ist das Kupplungselement 14 leistenförmig ausgebildet und erstreckt sich, wie insbesondere aus den Figuren 5 und 6 hervorgeht, entlang dem gesamten vorgesehenen Hubweg der Spindelmutter 9.

In der in den Figuren 3 und 5 dargestellten Position des leistenförmigen Kupplungselements 14 greift das Kupplungselement 14 entlang dem gesamten möglichen Hubweg der Spindelmutter 9 in eine von deren Ausnehmungen 15 ein, sodass die Spindelmutter 9 ständig in Drehrichtung blockiert ist. Bei dieser Position des Kupplungselements 14 wird also die Spindelmutter 9 in Abhängigkeit von der Drehrichtung der Gewindespindel 3 nach rechts oder links bewegt, sodass die zu bewegenden Möbelteile über das Hubelement 5, den Hebelmechanismus 11 sowie die Betätigungswelle 12 elektromotorisch angehoben oder gezielt abgesenkt werden können.

Wie insbesondere aus den Figuren 3 und 5 zu erkennen ist, weist das leistenförmige Kupplungselement 14 zwei im Abstand zueinander angeordnete bogenförmige Profilabschnitte 21 auf, deren Enden 22 sich an einer im Getriebegehäuse 1 vorgesehenen Anlagefläche 23 abstützen.

Zumindest im Bereich der bogenförmigen Profilabschnitte 21 sind in dem Getriebegehäuse 1 buckelförmige Vorsprünge 24 ausgebildet, an die sich, wie insbesondere aus Fig. 3 zu erkennen ist, die bogenförmigen Profilabschnitte 21 im eingekuppelten Zustand des Kupplungselements 14 formschlüssig anschmiegen. Durch diese Konstellation wird eine sehr stabile und robuste Halterung des leistenförmigen Kupplungselements 14 an dem Getriebegehäuse 1 erzielt, sodass der erfindungsgemäße Linearantrieb dadurch extrem große Kräfte übertragen kann.

Alternativ sind selbstverständlich auch andere Kupplungsmöglichkeiten denkbar, indem Kupplungselemente vorgesehen sind, die nicht schwenkbar sondern ausschließlich radial in dem Getriebegehäuse 1 verschiebbar sind. Auch ist es denkbar, die Kupplungselemente an dem Hubelement 5 vorzusehen und durch Axialverschiebung und/oder Radialverschiebung der Kupplungselemente die Drehbewegung der Spindelmutter 9 auf der Gewindespindel 3 zu blockieren.

Die schwenkbare Anordnung des Kupplungselements 14, wie es in der Zeichnung dargestellt ist, ist jedoch eine optimale Ausführungsform, die einfach im Aufbau und in der Lage ist, auch größere Kräfte zu übertragen.

Der bereits erwähnte Betätigungshebel 17, der von Hand oder über größere Entfernung mittels Bowdenzügen verschwenkt werden kann, betätigt ein in den Figuren 5, 5a und 6, 6a zu erkennendes längliches Schiebeelement 25. An dem Schiebeelement 25 sitzt etwa in dessen Mitte ein vorspringender, runder Zapfen 26, der durch eine Öffnung des Betätigungshebels 17 hindurchgreift und bei Verschwenkung des Betätigungshebels 17 um dessen Schwenkachse 27 das Schiebeelement 25 parallel zu der Gewindespindel 3 hin- und herbewegt.

Das Schiebeelement 25 ist an zwei voneinander entfernten Stellen mit Vertiefungen versehen, die jeweils schräge Auflaufflächen 28 bilden.

Im Bereich der schrägen Auflaufflächen 28 weist das leistenförmige Kupplungselement 14 Nocken 29 auf, die bei Bewegung des Schiebeelements 25 angehoben oder abgesenkt werden. Durch das Anheben und Absenken der an dem Kupplungselement 14 vorgesehenen Nocken 29 erfolgt eine Verschwenkung des Kupplungselements 14 zwischen der gekuppelten und der entkuppelten Position. Wenn sich die Nocken 29, wie in den Figuren 3, 5 und 5a dargestellt, im Bereich der tiefsten Stellen der schrägen Auflaufflächen 28 befinden, so entspricht dies der eingekuppelten Normalstellung des Kupplungselements 14, in welcher das Kupplungselement 14 automatisch aufgrund der Kraft der Druckfedern 18 gehalten wird.

Wenn der Betätigungshebel 17 aus der in den Figuren 5 bzw. 5a dargestellten Position entgegen der Kraft einer Zugfeder 30 nach rechts in die in Fig. 6, 6a dargestellte Position verschwenkt wird, so wird auch das Schiebeelement 25 mit Hilfe des Zapfens 26 nach rechts verschoben, sodass die Nocken 29 die schrägen Auflaufflächen 28 hinauflaufen, wodurch eine Verschwenkung des leistenförmigen Kupplungselements 14 in die entkuppelte Position bewirkt wird.

Wenn also, ohne den Motor zu betätigen, eine Schnellabsenkung der angehobenen Möbelteile erfolgen soll, so wird der Betätigungshebel 17 in die in Fig. 6, 6a dargestellte rechte Position verschwenkt, wodurch das Kupplungselement 14 in die entkuppelte Stellung geschwenkt wird, sodass durch das Gewicht der angehobenen Möbelteile das Hubelement 5 über die Betätigungswelle 12 und den Hebelmechanismus 11 in der Zeichnung nach links gedrückt und dadurch die Spindelmutter 9 in Rotation versetzt wird, sodass diese sich auf der stillstehenden Gewindespindel 3 ebenfalls nach links bewegt.

Wenn kein Druck mehr auf den Betätigungshebel 17 ausgeübt wird, gelangt dieser aufgrund der Kraft der Zugfeder 30 wieder in seine nach links geschwenkte Position, die der eingekuppelten Stellung des Kupplungselements 14 entspricht. Wenn dann anschließend der Motor betätigt und die Gewindespindel 3 in Rotation versetzt wird, so erfolgt ein gezieltes Anheben und Absenken der beweglichen Möbelteile mittels des elektromotorischen Linearantriebs.

### Bezugszeichenliste

- 1: Getriebegehäuse
- 2: Drehzahlreduziergetriebe
- 3: Gewindespindel
- 4: Lager
- 5: Hubelement
- 6: Ausgangswelle des Motors
- 7: Schnecke
- 8: Schneckenrad
- 9: Spindelmutter
- 10: Kugellager
- 11: Hebelmechanismus
- 12: Betätigungswelle
- 13: Stirnfläche des Hubelements
- 14: Kupplungselement
- 15: Ausnehmung
- 16: Anschlagfläche
- 17: Betätigungshebel
- 18: Druckfeder
- 19: Führungsbolzen
- 20: Abdeckhaube
- 21: bogenförmige Profilabschnitte
- 22: Enden der bogenförmigen Profilabschnitte
- 23: Anlagefläche
- 24: buckelförmige Vorsprünge
- 25: Schiebeelement
- 26: Zapfen
- 27: Schwenkachse
- 28: schräge Auflaufflächen
- 29: Nocken
- 30: Zugfeder

## Patentansprüche

1. Elektromotorischer Linearantrieb, insbesondere zum Verstellen von beweglich gelagerten Teilen von Liege- und Sitzmöbeln, mit einem Antriebsmotor, einer Gewindespindel (3), einem zwischen dem Antriebsmotor und der Gewindespindel (3) angeordneten Drehzahlreduziergetriebe (2), einer auf der Gewindespindel (3) sitzenden Spindelmutter (9), die wahlweise in Drehrichtung arretierbar und in Abhängigkeit von der Drehrichtung der Gewindespindel (3) in Axialrichtung der Gewindespindel (3) verfahrbar ist, sowie einem durch die Axialbewegung der Spindelmutter (9) antreibbaren Hubelement (5) zum Verstellen der beweglichen Möbelteile, **dadurch gekennzeichnet, dass** das Antriebsrad des Drehzahlreduziergetriebes (2) fest mit der Gewindespindel (3) verbunden ist, dass ein sich an dem Getriebegehäuse (1) oder an einem daran angeschlossenen Gehäuseabschnitt abstützendes, mit der Spindelmutter (9) zusammenwirkendes Kupplungselement (14) vorgesehen ist, dass die Spindelmutter (9) an ihrem Umfangsbereich mit mindestens zwei in entgegengesetzte Umfangsrichtungen weisenden Anschlagflächen (16) versehen ist, dass das Kupplungselement (14) in Richtung auf den Umfangsbereich der Spindelmutter (9) und von diesem weg bewegbar ist, wobei es im gekuppelten Zustand mit den Anschlagflächen (16) der Spindelmutter (9) zusammenwirkt, und dass das Kupplungselement (14) leistenförmig ausgebildet ist und sich entlang der gesamten Hublänge der Spindelmutter (9) erstreckt.

2. Elektromotorischer Linearantrieb nach Anspruch 1, **dadurch gekennzeichnet, dass** das leistenförmige Kupplungselement radial zu der Spindelmutter (9) bewegbar und in dem Getriebegehäuse (1) gelagert ist.

3. Elektromotorischer Linearantrieb nach Anspruch 1, **dadurch gekennzeichnet, dass** das leistenförmige Kupplungselement (14) schwenkbar in dem Getriebegehäuse (1) gelagert ist.

4. Elektromotorischer Linearantrieb nach Anspruch 3, **dadurch gekennzeichnet, dass** sich an das leistenförmige Kupplungselement (14) in zumindest einigen Bereichen im Querschnitt bogenförmige Profilabschnitte (21) anschließen und dass sich die Enden (22) der bogenförmigen Profilabschnitte (21) an einer in dem Getriebegehäuse (1) vorgesehenen Anlagefläche (23) abstützen.

5. Elektromotorischer Linearantrieb nach Anspruch 4, **dadurch gekennzeichnet, dass** in dem Getriebegehäuse (1) buckelförmige Vorsprünge (24) ausgebildet sind und dass die bogenförmigen Profilabschnitte (21) des Kupplungselements (14) in der eingekuppelten Stellung diese formschlüssig umgreifen.

6. Elektromotorischer Linearantrieb nach einem der Ansprüche 1 bis 5, **dadurch gekennzeichnet, dass** die Spindelmutter (9) über ein Kugellager (10) fest mit dem Hubelement (5) gekoppelt ist.

7. Elektromotorischer Linearantrieb nach einem der Ansprüche 1 bis 6, **dadurch gekennzeichnet, dass** außen an dem Getriebegehäuse (1) ein von Hand oder über Bowdenzüge schwenkbarer Betätigungshebel (17) zum Ein- und Auskuppeln des leistenförmigen Kupplungselements (14) vorgesehen ist.

8. Elektromotorischer Linearantrieb nach einem der Ansprüche 1 bis 7, **dadurch gekennzeichnet, dass** das leistenförmige Kupplungselement (14) in Richtung auf seine gekuppelte Stellung federbelastet ist.

9. Elektromotorischer Linearantrieb nach Anspruch 8, **dadurch gekennzeichnet, dass** der Betätigungshebel (17) mit einem in Axialrichtung der Gewindespindel (3) beweglichen Schiebeelement (25) verbunden ist, dass das Schiebeelement (25) mit schrägen Auflaufflächen (28) versehen ist, dass an dem leistenförmigen Kupplungselement (14) Nocken (29) vorgesehen sind, die an den schrägen Auflaufflächen (28) anliegen, und dass durch die mit dem Betätigungshebel (17) bewirkte Längsverschiebung des Schiebeelements (25) das leistenförmige Kupplungselement (14) zwischen seiner gekuppelten und entkuppelten Stellung hin- und herbewegbar ist.

10. Elektromotorischer Linearantrieb nach Anspruch 8 und 9, **dadurch gekennzeichnet, dass** beim Anheben der Nocken (29) mittels der schrägen Auflaufflächen (28) des Schiebeelements (25) das Kupplungselement (14) entgegen der Kraft der Feder (18) in die entkuppelte Stellung und beim Absenken der Nocken (29) des Kupplungselements (14) durch die Federkraft in die gekuppelte Stellung bewegbar ist.

11. Elektromotorischer Linearantrieb nach einem der Ansprüche 1 bis 10, **dadurch gekennzeichnet, dass** die Spindelmutter (9) an ihrem Umfang vier Ausnehmungen (15) aufweist, an deren Randbereichen jeweils die in entgegengesetzte Richtungen weisenden, mit dem Kupplungselement (14) zusammenwirkenden Anschlagflächen (16) vorgesehen sind.

12. Elektromotorischer Linearantrieb nach einem der Ansprüche 1 bis 11, **dadurch gekennzeichnet, dass** die Gewindesteigung der Gewindespindel (3) sowie der Spindelmutter (9) so bemessen ist, dass keine Selbsthemmung eintritt.

13. Elektromotorischer Linearantrieb nach einem der Ansprüche 1 bis 12, **dadurch gekennzeichnet, dass** das Drehzahlreduziergetriebe (2) nicht selbsthemmend ist.

14. Elektromotorischer Linearantrieb nach einem der Ansprüche 1 bis 13, **dadurch gekennzeichnet, dass** das Drehzahlreduziergetriebe (2) eine auf der Motorwelle sitzende Schnecke (7) und ein als Antriebsrad dienendes, fest mit der Gewindespindel (3) verbundenes Schneckenrad (8) aufweist.

15. Elektromotorischer Linearantrieb nach einem der Ansprüche 1 bis 14, **dadurch gekennzeichnet, dass** das Hubelement (5) in Wirkverbindung mit einem Hebelmechanismus (11) steht, dass das Hubelement (5) durch seine Axialbewegung den Hebelmechanismus (11) verschwenkt und dass der Hebelmechanismus (11) mit einer Betätigungswelle (12) zum Verstellen der entsprechenden beweglichen Möbelteile verbunden ist.

## Claims

1. An electric motor-actuated linear drive, in particular for adjusting moveably mounted parts of lying and seating furniture, comprising a drive motor, a threaded spindle (3), a speed reduction gear (2) arranged between the drive motor and the threaded spindle (3), a spindle nut (9) which is carried on the threaded spindle (3) and which can be selectively arrested in the direction of rotation and which is displaceable in the axial direction of the threaded spindle (3) in dependence on the direction of rotation of the threaded spindle (3), and a stroke element (5) drivable by the axial movement of the spindle nut (9) for adjusting the moveable furniture parts, **characterised in that** the drive wheel of the speed reduction gear (2) is fixedly connected to the threaded spindle (3), there is provided a coupling element (14) which is supported on the gear housing (1) or on a housing portion connected thereto and which co-operates with the spindle nut (9), the spindle nut (9) is provided at its peripheral region with at least two abutment surfaces (16) facing in opposite peripheral directions, the coupling element (14) is moveable in a direction towards the peripheral region of the spindle nut (9) and away from same, wherein in the coupled condition it co-operates with the abutment surfaces (16) of the spindle nut (9), and the coupling element (14) is of a bar-shaped configuration and extends along the entire stroke length of the spindle nut (9).

2. An electric motor-actuated linear drive as set forth in claim 1 **characterised in that** the bar-shaped coupling element is mounted moveably radially relative to the spindle nut (9) and in the gear housing (1).

3. An electric motor-actuated linear drive as set forth in claim 1 **characterised in that** the bar-shaped coupling element (4) is mounted pivotably in the gear housing (1).

4. An electric motor-actuated linear drive as set forth in claim 3 **characterised in that** profile portions (21) which are arcuate in cross-section in at least some regions adjoin the bar-shaped coupling element (14) and the ends (22) of the arcuate profile portions (21) are supported at a contact surface (23) provided in the gear housing (1).

5. An electric motor-actuated linear drive as set forth in claim 4 **characterised in that** hump-shaped projections (24) are provided in the gear housing (1) and the arcuate profile portions (21) of the coupling element (14) embrace same in positively locking relationship in the coupled position.

6. An electric motor-actuated linear drive as set forth in one of claims 1 through 5 **characterised in that** the spindle nut (9) is fixedly coupled to the stroke element (5) by way of a ball bearing (10).

7. An electric motor-actuated linear drive as set forth in one of claims 1 through 6 **characterised in that** provided externally on the gear housing (1) is an actuating lever (17) pivotable by hand or by way of Bowden cables for coupling and uncoupling the bar-shaped coupling element (14).

8. An electric motor-actuated linear drive as set forth in one of claims 1 through 7 **characterised in that** the bar-shaped coupling element (14) is spring-loaded in a direction towards its coupled position.

9. An electric motor-actuated linear drive as set forth in claim 8 **characterised in that** the actuating lever (17) is connected to a slide element (25) moveable in the axial direction of the threaded spindle (3), the slide element (25) is provided with inclined run-on surfaces (28), provided on the bar-shaped coupling element (14) are cams (29) which bear against the inclined run-on surfaces (28), and the bar-shaped coupling element (14) is reciprocable between its coupled and uncoupled positions by the longitudinal displacement of the slide element (25), that is caused with the actuating lever (17).

10. An electric motor-actuated linear drive as set forth in claim 8 and claim 9 **characterised in that** when the cams (29) are lifted by means of the inclined run-on surfaces (28) of the slide element (25) the coupling element (14) is moveable against the force of the spring (18) into the uncoupled position and upon downward movement of the cams (29) of the coupling element (14) it is moveable into the coupled position by the spring force.

11. An electric motor-actuated linear drive as set forth in one of claims 1 through 10 **characterised in that** at its periphery the spindle nut (9) has four recesses (15), at the edge regions of which are provided respective abutment surfaces (16) facing in opposite directions and co-operating with the coupling element (14).

12. An electric motor-actuated linear drive as set forth in one of claims 1 through 11 **characterised in that** the thread pitch of the threaded spindle (3) and the spindle nut (9) is so sized that no self-locking action occurs.

13. An electric motor-actuated linear drive as set forth in one of claims 1 through 12 **characterised in that** the speed reduction gear (2) is not self-locking.

14. An electric motor-actuated linear drive as set forth in one of claims 1 through 13 **characterised in that** the speed reduction gear (2) has a worm (7) carried on the motor shaft and a worm gear (8) serving as a drive wheel and fixedly connected to the threaded spindle (3).

15. An electric motor-actuated linear drive as set forth in one of claims 1 through 14 **characterised in that** the stroke element (5) is operatively connected to a lever mechanism (11), the stroke element (5) pivots the lever mechanism (11) by the axial movement of the stroke element and the lever mechanism (11) is connected to an actuating shaft (12) for adjusting the corresponding moveable furniture parts.

## Revendications

1. Actionnement linéaire par moteur électrique, en particulier pour ajuster des éléments logés de manière mobile de meubles-couchettes et -sièges, comprenant un moteur d'entraînement, une broche filetée (3), un train réducteur (2) disposé entre le moteur d'entraînement et la broche filetée (3), un écrou de broche (9) monté sur la broche filetée (3) et conçu pour être verrouillé en direction de rotation et au choix déplacé dans la direction axiale de la broche filetée (3) en fonction de la direction de rotation de la broche filetée (3), et un élément de levage (5) pouvant être entraîné par le mouvement axial de l'écrou de broche et destiné à l'ajustage des éléments de meuble, **caractérisé en ce que** la roue motrice du train réducteur (2) et solidaire de la broche filetée (3), qu'un élément de couplage (14) est prévu qui coopère avec l'écrou de broche (9) et qui prend appui sur une boîte de transmission (1) ou sur une partie de boîte raccordée à cette dernière, que l'écrou de broche (9) est muni d'au moins deux surfaces de butée (16) qui sont orientées dans des directions circonférentielles opposées, que l'élément de couplage (14) est mobile vers la zone périphérique de l'écrou de broche et peut s'éloigner de cette dernière, ledit élément de couplage, à l'état accouplé, coopérant avec les surfaces de butée (16) de l'écrou de broche (9), et que ledit élément de couplage (14) est réalisé sous la forme d'une barrette et s'étend le long de la toute longueur de course de l'écrou de broche.

2. Actionnement linéaire par moteur électrique selon la revendication 1, **caractérisé en ce que** l'élément de couplage réalisé sous la forme d'une barrette et logé de manière mobile par rapport à l'écrou de broche (9) et dans la boîte de transmission (1).

3. Actionnement linéaire par moteur électrique selon la revendication 1, **caractérisé en ce que** l'élément de couplage (14) réalisé sous la forme d'une barrette est logé de manière pivotable dans la boîte de transmission (1).

4. Actionnement linéaire par moteur électrique selon la revendication 3, **caractérisé en ce que** des sections profilées (21) présentant une coupe transversale arquée au moins dans certaines parties se joignent à l'élément de couplage (14) réalisé sous la forme d'une barrette et que les extrémités (22) des sections profilées (21) arquées prennent appui sur une surface d'appui (23) prévue dans la boîte de transmission (1).

5. Actionnement linéaire par moteur électrique selon la revendication 4, **caractérisé en ce que** des protubérances en forme de bosse (24) sont formées dans la boîte de transmission (1) et que les sections profilées (21) de l'élément de couplage (14) les entourent par engagement positif en position d'accouplement.

6. Actionnement linéaire par moteur électrique selon l'une des revendications 1 à 5, **caractérisé en ce que** l'écrou de broche (9) est couplé rigidement à l'élément de levage (5) par l'intermédiaire d'un palier sphérique (10).

7. Actionnement linéaire par moteur électrique selon l'une des revendications 1 à 5, **caractérisé en ce que** extérieurement à la boîte de transmission (1) est prévu un levier d'actionnement (17) pivotable manuellement ou par l'intermédiaire des cablês Bowden pour le couplage et le découplage de l'élément de couplage (14) réalisé sous la forme d'une barrette.

8. Actionnement linéaire par moteur électrique selon l'une des revendications 1 à 7, **caractérisé en ce que** l'élément de couplage (14) réalisé sous la forme d'une barrette est sollicité par ressort vers sa position accouplée.

9. Actionnement linéaire par moteur électrique selon la revendication 8, **caractérisé en ce que** le levier d'actionnement (17) est relié à un élément coulissant (25) mobile en direction axiale de l'écrou de broche (3), que l'élément coulissant (25) est muni des surfaces en rampe inclinées (28), que des cames (29) sont prévues sur l'élément de couplage (14) réalisé sous la forme d'une barrette, cames qui s'appuient sur les surfaces en rampe inclinées (28) et que l'élément de couplage (14) réalisé sous la forme d'une barrette se peut déplacer en va-et-vient entre sa position de couplage et sa position de découplage grâce au mouvement longitudinal de l'élément coulissant (25) provoqué par le levier d'actionnement (17).

10. Actionnement linéaire par moteur électrique selon les revendications 8 et 9, **caractérisé en ce que** lors du levage de la came (29) à l'aide des surfaces en rampe inclinées (28) de l'élément coulissant (25), l'élément de couplage (14) se peut déplacer dans la position découplée contre la force du ressort (18) et, lors de l'abaissement de la came (29) de l'élément de couplage (14), dans la position couplée, par la force du ressort.

11. Actionnement linéaire par moteur électrique selon l'une des revendications 1 à 10, **caractérisé en ce que** l'écrou de broche (9) présente sur sa périphérie quatre évidements (15), aux zones marginales desquelles sont prévues les surfaces de butée (16) coopérant avec l'élément de couplage (14) et orientées dans des directions opposées.

12. Actionnement linéaire par moteur électrique selon l'une des revendications 1 à 11, **caractérisé en ce que** le pas de filetage de la broche filetée (3) et de l'écrou de broche (9) sont dimensionnés de manière à ne produire aucun blocage automatique.

13. Actionnement linéaire par moteur électrique selon l'une des revendications 1 à 12, **caractérisé en ce que** le train réducteur (2) n'est pas auto-bloquant.

14. Actionnement linéaire par moteur électrique selon l'une des revendications 1 à 13, **caractérisé en ce que** le train réducteur (2) comporte un vis sans fin (7) situé sur l'arbre moteur et une roue à vis (8) solidaire à la broche filetée et servant de roue d'entraînement.

15. Actionnement linéaire par moteur électrique selon l'une des revendications 1 à 14, **caractérisé en ce que** l'élément de levage (5) est en liaison active avec un mécanisme à levier (11), que l'élément de levage (5) pivote le mécanisme à levier (11) par son mouvement axial et que le mécanisme à levier (11) est connecté à un arbre d'actionnement (12) pour ajuster les éléments de meuble mobiles correspondants.
